# EUROPÄISCHE PATENTSCHRIFT

(11) **EP 0 399 160 B1**
(45) Veröffentlichungstag und Bekanntmachung des Hinweises auf die Patenterteilung: **04.05.1994**
(21) Anmeldenummer: 90105191.2
(22) Anmeldetag: 20.03.1990
(51) Int. Cl.: C08G 18/81, C08G 18/48, C08G 18/42, C08G 18/68, C08G 18/08

(54) **Verfahren zur Herstellung wässriger, strahlenhärtbarer Urethanacrylatdispersionen**
Process for the preparation of aqueous radiation curable urethane-acrylate dispersions
Procédé de préparation de dispersions aqueuses d'uréthane-acrylates durcissables par irradiation

(30) Priorität: 19.05.1989 DE 3916340
(43) Veröffentlichungstag der Anmeldung: 28.11.1990
(73) Patentinhaber: HÜLS AKTIENGESELLSCHAFT, 45764 Marl (DE)
(72) Erfinder: Flakus, Werner, Dr., D-4350 Recklinghausen (DE)

(56) Entgegenhaltungen:
- EP-A- 0 167 188
- EP-A- 0 209 684
- WO-A-86/06730

## Beschreibung

Die Erfindung betrifft die Herstellung wäßriger, strahlenhärtbarer Urethanacrylatdispersionen in Abwesenheit von Lösungsmitteln aus cycloaliphatischen Polyisocyanaten, Hydroxyethylacrylat, COOH-gruppenhaltigen Esterpolyolen und wäßrigen Basen.

Strahlenhärtbare Dispersionen sind Neuentwicklungen der letzten Jahre. Sie resultieren aus der Weiterentwicklung von zunächst lediglich physikalisch härtenden Emulsionen in Richtung thermisch oder chemisch nachvernetzenden Systemen. Heute können z. B. aus ungesättigten, wäßrigen Dispersionen gebildete Filme durch UV-, Laser- oder Elektronenstrahl-Härtung in wenigen Sekunden oder Bruchteilen von Sekunden gehärtet und polymerisiert werden.

Strahlenhärtbare, wäßrige Polyurethan-Dispersionen, wie z. B. in der DE-OS 35 26 016 beschrieben, zeichnen sich durch eine Lagerstabilität über mehrere Jahre aus. Die gehärteten Filme weisen interessante Stahlblech- und Foliendaten aus und sind lösemittelbeständig.
Die Herstellung solcher anspruchsvollen Dispersionen ist sehr aufwendig: Zunächst werden gesättigte und ungesättigte Polyole mit z. B. Isophorondiisocyanat dahingehend zur Umsetzung gebracht, daß NCO-terminierte Prepolymere gebildet werden. Je nach Molekulargewicht und Viskosität sind acetonische Verdünnungen bis zu 50 Massen-% erforderlich. Sodann erfolgt der chemische Einbau tensidwirksamer, ionischer Reaktanten, z. B. von 30 %iger wäßriger Natriumsalzlösung einschlägiger Aminocarbonsäuren unter Ausbildung ionogener, NCO-freier Prepolymer-Systeme, die nun in Wasser emulgierbar sind. Schließlich erfolgt die destillative Entfernung der Hilfslösemittel, wie z. B. von Aceton. Prepolymerenbildung, Dispergierung und destillative Entfernung von Aceton erfordern je nach Struktur der Reaktanten 15 bis 25 Stunden.

Aceton kann als wasserhaltiges Destillat nicht wieder unmittelbar verwendet werden.

WO-A-8 606 730 offenbart ein Verfahren zur Herstellung von Urethanacrylatverbindungen in Gegenwart von Reaktivverdünnern, in dem aliphatische oder cycloaliphatische Diisocyanate mit Hydroxylalkylacrylaten umgesetzt und anschließend mit COOH-haltigen Esterpolyolen, hergestellt aus Polyolen und Dicarbonsäureanhydriden, unter Bildung von NCO-freien, COOH-haltigen Urethanacrylaten weiter umgesetzt werden. Durch Zusatz von 20 bis 50 % Reaktivverdünner stellt man eine für die Anwendung geeignete Viskosität ein.

Vor dem Hintergrund dringend gebotener Rohstoff- und Energiekosten-Einsparung ist das vorgangs beschriebene Verfahren zur Herstellung solcher anspruchsvollen Dispersionen unbefriedigend. Reaktionszeit und Reaktionsvolumen, aber auch Lösemittel- und Energieaufwand sind beträchtlich. Nun sind aber die auszubildenden Urethanacrylat-ionomeren bekanntlich thermisch und chemisch empfindlich, d. h. dahingehend gefährdet, daß sie im Rahmen der Prepolymerbildung vorzeitig polymerisieren oder mindestens graduelle Veränderungen erleiden können.

Alle Verfahrensvereinfachungen sind daher nutzlos, wenn die Lagerstabilität der Emulsionen, die gemäß DE-OS 35 26 016 über Jahre gegeben ist, beeinträchtigt wird.

Bei dieser komplizierten Problemlage besteht also die Aufgabe, vereinfachte chemische und/oder verfahrenstechnische Schritte zu ermitteln, um wäßrige strahlenhärtbare Dispersionen lösungsmittelfrei herzustellen, wobei aber die Qualitätsmerkmale solcher Dispersionen und der gehärteten Filme den hohen Qualitätsanforderungen genügen müssen.

Die Lösung der Aufgabe erfolgte überraschend durch Einsatz spezieller COOH-haltiger Esterpolyole.

Gegenstand der Erfindung ist daher ein Verfahren zur Herstellung wäßriger, strahlenhärtbarer Urethanacrylatdispersionen, welches dadurch gekennzeichnet ist, daß Isophorondiisocyanat zunächst mit Hydroxyacrylaten bei 25 bis 50 °C im NCO/OH-Äquivalentverhältnis von 3 : 1 bis 5 : 1 unter Bildung von NCO-haltigen Urethanacrylaten umgesetzt, anschließend mit COOH-haltigen Esterpolyolen aus Polyolen und Dicarbonsäureanhydriden in Abwesenheit von Lösemitteln bei 50 bis 100 °C unter Bildung von COOH-haltigen Urethanacrylaten mit einem NCO-Gehalt von ≦ 0,2 Massen-% weiter umgesetzt und danach bei 90 bis 95 °C mit wäßrigen Basen und Wasser emulgiert werden.

Besonders geeignete COOH-haltige Esterpolyole sind solche aus Polyolen und Trimethyladipinsäureanhydrid.

Da die Eliminierung von Hilfslösemitteln aller Art wesentlicher Bestandteil der Zielsetzung ist, wurden alle Versuche lösemittelfrei ausgeführt.

Zunächst wurde versucht, beim Arbeiten etwa entsprechend DE-OS 35 26 016 auf Lösemittel zu verzichten. Es zeigt sich, daß bei Verzicht auf z. B. Aceton mit fortschreitender Reaktion von Polyolen und Isocyanaten die Viskositäten der einschlägigen Prepolymeren (MG ≈ 2 500 bis 4 000) Temperaturen von zunächst 60 bis 80 °C, schließlich aber von 90 bis 100 °C erfordert. Mit einfachen Rührwerken ist die Viskosität einigermaßen, im Dissolver gut beherrschbar. Überraschenderweise passieren diverse Acrylurethan-Systeme dieser Temperaturbereiche bei umsichtiger Arbeitsweise. Während nun bei der acetonischen Fahrweise und bei tieferen Temperaturen durch zügige Eingabe wäßriger, tensidwirksamer Salze einschlägiger Aminosäuren in das Prepolymer der gewünschte chemische Einbau des Emulgators unter Ausbildung diesbezüglicher Harnstoffcarbonsäuren spontan vollzogen wird, treten bei der lösemittelfreien Arbeitsweise auch unerwünschte Reaktionen auf.

So reagieren bei 90 bis 100 °C nicht nur selektiv die NH₂-Äquivalente der tensidwirksamen wäßrigen Salzlösungen, sondern es gelangt in hohem Maße Wasser als Reaktant mit NCO-Äquivalenten unter CO₂-Abspaltung in Reaktion.
Dabei kommt es zu einer spontanen und enormen Schaumbildung im Reaktor, bevor überhaupt nennenswerte Mengen des Tensids eingetragen werden können, wie nachfolgend skizziert.

In acetonischer Lösung, bei niedrigen Temperaturen ablaufende Reaktion: 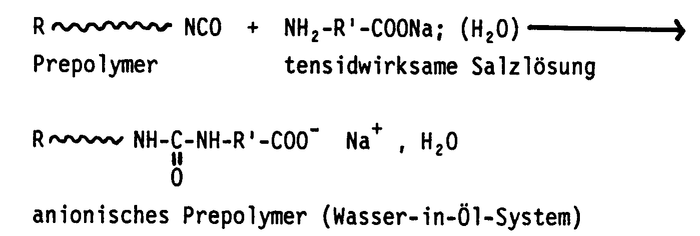
Bei 90 bis 100 °C vorzugsweise ablaufende Reaktion: 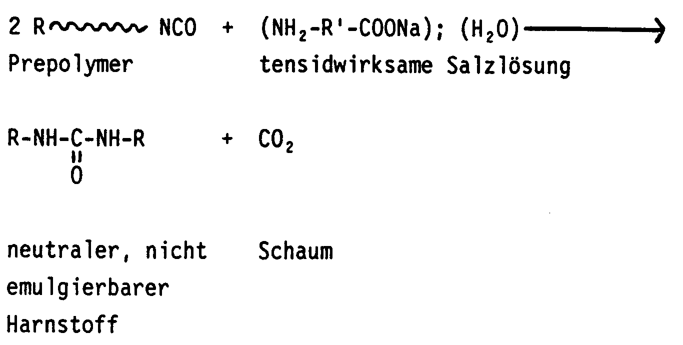
Daraus erhellt sich, daß wäßrige Tensidsalzlösungen bei 90 bis 100 °C nicht verwendbar sind. Damit entfallen diverse Tensidsysteme, die entweder nur als wäßrige Lösung oder aber als hochschmelzbare, im Polymer unlösliche Salze zur Verfügung stehen.

Es wurde weiterhin versucht, den Einbau des Emulgators mit Hilfe von Dimethylolpropionsäure, frei von organischen Lösemitteln, auszuführen. 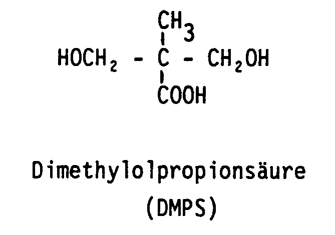
Nun wird die Urethanbildung bekanntlich bei Anwesenheit acider Gruppen wie -COOH u. a. erheblich verlangsamt. Man erhält schließlich ein NCO-armes Prepolymer von ca. 0,2 % NCO-Gehalt. Bei der Eingabe von verdünnter NaOH oder von tertiären Aminen und restlichen Wasseranteilen kommt es zunächst zu einer Benetzung organischer und wäßriger Anteile, doch resultiert schließlich ein zwar wasserhaltiges, aber nicht wasserverdünnbares klebriges Harz. Da DMPS in acetonischer Lösung, in allerdings langen Reaktionszeiten, COOH-terminierte Prepoly mere bildet, die mit Basen brauchbare Emulsionen ergeben, ist zu folgern, daß DMPS bei höheren Temperaturen Nebenreaktionen verschiedener Art eingeht.

Das Ausmaß der Schwierigkeiten - vielschichtige Nebenreaktionen -, die bei lösemittelfreier Arbeitsweise mit hohen Temperaturen und Viskositäten, mit zahllosen erfolglosen Versuchen registriert werden, ist hoch. Dagegen gewährleistet die lösemittelhaltige acetonische Arbeitsweise ein hohes Maß an reproduzierbaren und sehr guten Endprodukten.

Das erfindungsgemäße Verfahren gestattet es nun praktisch, ohne Nebenreaktionen, störungsfrei und reproduzierbar, sowie frei von organischen Hilfslösemitteln bei 90 bis 100 °C wäßrige, strahlenhärtbare Polyurethanemulsionen herzustellen.

Erfindungsgemäß wird ausgehend von Isophorondiisocyanat dieses zunächst mit 2-Hydroxy-ethylacrylat umgesetzt, d. h. partiell acryliert (A).
Zwischenzeitlich werden Polyole wie Trimethylolpropan, Butandiol, Polyetherdiole u. a. unter Zusatz von 2,2,4(2,4,4)-Trimethyladipinsäureanhydrid (TMASA) geschmolzen, bis die homogene Schmelze 90 °C erreicht hat (B). Bei dieser Temperatur kommt es ohne Wasserabspaltung lediglich zur Bildung saurer Ester-Polyole der TMASA. Durch Messung der Säurezahl kann in einfacher Weise der exakte Umsatz ermittelt werden (Umsatz 0 = 2 COOH-Äquivalente, Umsatz 100 % = 1 COOH-Äquivalent). Eine weitergehende Veresterung der aciden Anteile ist unterhalb 120 °C praktisch nicht nachweisbar.

Die 90 °C heiße Schmelze wird zweckmäßigerweise auf 50 °C abgekühlt und als Komponente (B) in die Vorlage (A) nach Maßgabe der Reaktionswärme eingetragen, wobei das Reaktionsgut dort allmählich von 60 bis 95 °C erwärmt wird. Die viskose Prepolymerschmelze ist in Glasgefäßen mit Glasrührer bei 95 °C rührbar (erfordert also nicht Dissolveraggregate).

Nach Vorliegen eines weitgehend NCO-freien oder NCO-armen (NCO ≦ 0,2 Massen-%) Prepolymeren, der jedoch noch einen Gehalt von 1 bis 2 Massen-%, vorzugsweise 1,2 bis 1,8 COOH, bezogen auf Feststoff enthält, trägt man zunächst verdünnte Natronlauge und sodann 85 bis 90 °C heißes Restwasser unter Rührung ein. Man erhält nach Abkühlung eine feinteilige, blaustichige und lagerstabile Dispersion, die nach physikalischer Trocknung und Strahlenhärtung hochglänzende Filme liefert.

Die Stahlblech und Foliendaten der erfindungsgemäß hergestellten Dispersion sind den Systemen, hergestellt aus acetonischer Lösung, adäquat.

Die COO-haltigen Esterpolyole sind Umsetzungsprodukte von Polyolmischungen, bestehend aus Trimethylolpropan, aliphatischen Diolen wie Ethylenglykol und Homologen, wie Polyetherpolyolen mit Dicarbonsäureanhydriden, wie Trimethyladipinsäureanhydrid (technischer Qualität), Maleinsäureanhydrid oder Bernsteinsäureanhydrid, vorzugsweise TMASA.

Für die Hydroxyacrylate kommt vor allem 2-Hydroxyethylacrylat in Frage.

Als Basen zur Neutralisation und Emulgierung der COO-haltigen Prepolymere werden NaOH, KOH, LiOH, NH₄OH und/oder tertiäre Amine wie Triethylamin oder Dimethylaminoethanol, vorzugsweise NaOH, verwendet.

Die herausragende thermische und chemische Stabilisierung, die offensichtlich Acrylurethanen mit einer partiellen Veresterung durch Dicarbonsäureanhydriden, wie z. B. TMASA vermittelt wird, ist nicht schlüssig zu begründen, wohl am wenigsten im Vergleich mit Dimethylolpropionsäure.

Trimethyladipinsäureanhydrid ist ein dünnflüssiges Anhydrid, das durch thermische Wasserabspaltung aus Trimethyladipinsäure unter Cyclisierung gebildet wird. Es liegen etwa gleiche Anteile von 2.2.4- und 2.4.4-Methylisomeren in diesem technischen Produkt vor. 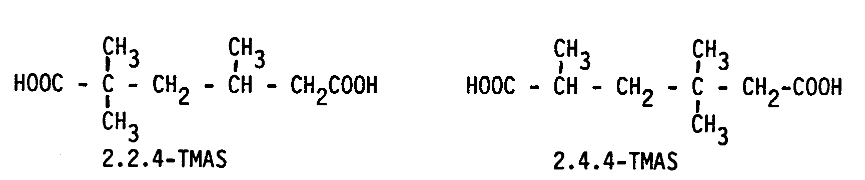
Nach Wasserabspaltung: 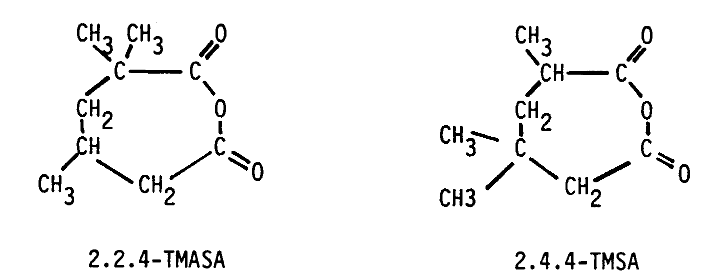
Es lag nahe, weitere Carbonsäureanhydride auf Eignung zur Herstellung lösemittelfreier, strahlenhärtbarer, wäßriger Emulsionen zu testen. Es zeigte sich aber, daß einschlägige, technisch zugängliche Säureanhydride zwar verfahrensmäßig einsetzbar sind, jedoch erhebliche Nachteile verursachen. So vergilben bei der Strahlenhärtung die Filme von Emulsionen, etwa bei Verwendung von Anhydriden aromatischen Charakters.
Andere Anhydride bilden Emulsionen von geringem Feststoffgehalt und erfordern hohe wäßrige Verdünnung und/oder beeinträchtigen die Lagerstabilität der Emulsionen.

Die Vorteile des erfindungsgemäßen Verfahrens zur Herstellung wäßriger, strahlenhärtbarer Urethanacrylatdispersionen sind wie folgt zu benennen:
1. Der Zeitaufwand zur Herstellung der Emulsionen wird von mehr als 20 Stunden auf 7 Stunden (siehe Beispiel 1 und 4) herabgesetzt.
2. Der Reaktionsvolumenbedarf wird um annähernd 40 % vermindert.
3. Es werden etwa 40 Massen-% (bezogen auf die wäßrige Emulsion) oder etwa 100 Massen-% Lösemittel (bezogen auf die gehärtete Beschichtung), z. B. Aceton und diesbezügliche Destillationskosten eingespart.
4. Die erfindungsgemäß hergestellten Emulsionen liefern nach Strahlenhärtung alkalibeständige Beschichtungen. Sie bestehen den sogenannten Waschlaugentest (3 Stunden Einwirkung von 4 %iger NaOH bei 80 °C ohne Beeinträchtigung). Dieses Prädikat weisen viele herkömmliche anionische Dispersionen nicht auf.
5. Die Lagerstabilität der erfindungsgemäß hergestellten Emulsionen sind vorzüglich, die Stahlblech- und Foliendaten auf hohem Niveau.
6. Das Verfahren zeichnet sich durch einfache Arbeitsweise aus.

### Beispiel 1 (Stand der Technik: Lösemittelhaltige Fahrweise) Urethanharnstoffacryldispersionen

- Basis:: Isophorondiisocyanat-Polyether/Polyole
- Tensid:: Wäßrige Lösung von aminocapronsaurem Natrium

In einer Vorlage von 1 110 g Isophorondiisocyanat (5 Mol) und 2,8 g Dibutylzinndilaurat (DBTL) werden unter Rühren ein Gemisch von 1 272,7 g Polytetrahydrofuranetherdiol (2 Mol), MG ca. 650, OHZ 176 mgKOH/g (TERATHANE^{R} 650 der Firma DuPont), 235,3 g 2-Hydroxyethylacrylat (2 Mol), OHZ 476 MgKOH/g und 134 g Trimethylolpropan (1 Mol), zunächst bei 25 bis 35 °C zugetropft. Anschließend erfolgt die Aufheizung auf 50 bis 60 °C bis zur Ausbildung eines Harzes von 1,6 bis 1,9 Massenprozent NCO. Nach Verdünnung mit 2 754,8 g Aceton werden in das Reaktionsprodukt bei ca. 40 bis 50 °C 398 g Na-Salz der Aminocapronsäure in Form einer 30 %igen wäßrigen Lösung unter Rührung innerhalb von 5 Minuten eingetragen. Anschließend wird das Reaktionsprodukt mit 3 610 g Wasser dispergiert. Die acetonhaltige, wäßrige Dispersion wird durch Destillation von Aceton befreit. Der Feststoffgehalt der Dispersion beträgt ca. 42,5 Gewichtsprozent. Die Herstellungszeit beträgt ca. 18 Stunden. Die Viskosität der Dispersion: DIN-Becher Nr. 4: 18 sec.

Stahlblech- und Foliendaten nach Härtung der Dispersion unter Zusatz von 2,5 Gewichtsprozent DAROCUR^{R} 1 116 Handelsprodukt der Firma E. Merck, Darmstadt mit 200 Watt/inch in 5 Sekunden.

| | |
|---|---|
| Pendelhärte nach König gemäß DIN 53 157 (sec) | 45 |
| Erichsentiefung gemäß DIN 53 156 (mm) | > 10,0 |
| Schichtdicke (µm) | 145 |
| Bruchspannung gemäß DIN 53 455 (N/mm²) | 27,2 ± 4,5 |
| Lösemittelresistenz Reibtest mit 1 kg (rubs) | |

| Belastung/cm² | |
|---|---|
| Aceton | > 100 kein Angriff |
| Xylol | > 100 kein Angriff |

| Waschlaugentest: | Befund: |
|---|---|
| 80 °C heiße, 4 % NaOH | nach 30 Min. Film |
| 6 x 30 Min. Einwirkung | deutlich angegriffen |

### Beispiel 2 (Acetonfreie Fahrweise gemäß Beispiel 1)

Ansatz wie in Beispiel 1 beschrieben bis zur Ausbildung eines Harzes von 1,6 bis 1,9 Massenprozent NCO. Sodann Erwärmung bis auf 95 °C und Eingabe von 398 g Na-Salz der Aminocapronsäure in Form einer 30 %igen wäßrigen Lösung. Starke Schaumbildung und Gelierung des Produktes bereits nach Eingabe von etwa einem Drittel der Salzlösung.

### Beispiel 3 (Acetonfreie Fahrweise, Versuch mit Dimethylolpropionsäure)

- Basis:: Isophorondiisocyanat-Polyether/Polyole
- Tensid:: Dimethylolpropionsäure (DMPS)

In einer Vorlage von 1 332 g Isophorondiisocyanat (6 Mol), 0,17 g DBTL und 1,6 g Ionol CP (2.6-Di-tert.-butyl-4-methylphenol) werden unter Rühren 358,1 g 2-Hydroxy-ethylacrylat (3 Mol) (OHZ: 470 mg KOH/g) bei 25 bis 35 °C zugetropft und bis zur Ausbildung eines Harzes von 22,4 bis 23,4 Massenprozent NCO gerührt. Anschließend werden 1 260,7 g Polytetrahydrofuranetherdiol (2 Mol) MG ca. 650, OHZ 178 mgKOH/g (TERATHANE^{R} 650 der Firma DuPont), 134 g Dimethylolpropionsäure (1 Mol), 134 g Trimethylolpropan (1 Mol), 3,2 g Dibutylzinndilaurat zugegeben und die Reaktionstemperatur von 35 bis 45 °C auf 90 °C erhöht, bis zum NCO-Gehalt von 0,2 bis 0,3 Massenprozent. Dann werden 400 g einer 10 %igen Natronlauge (40 g NaOH + 360 g H₂O) (1 Mol) eingetragen, das Reaktionsgemisch homogenisiert und mit 4 467 g heißem Wasser verdünnt. Es bildet sich ein gummiartiger Feststoff, nach einigen Stunden kommt es zur Phasentrennung.

### Beispiel 4 (erfindungsgemäß)

- Basis:: Isophorondiisocyanat/Polyetherpolyole 2.2.4(2.4.4)-Trimethyladipinsäureanhydrid

A) In eine Vorlage von 1 110 g IPDI (5 Mol) und 0,13 g Dibutylzinndilaurat (DBTL) und 1,5 g Ionol CP (2.6-tert.-butyl-4-methylphenol) werden unter Rühren 238,7 g 2-Hydroxyethylacrylat (2 Mol) (OHZ 470 mgKOH/g) bei 25 bis 35 °C zugetropft, bis zur Ausbildung eines Harzes von 24,9 bis 25,9 Massen-% NCO. Anschließend werden 1 657,7 g Umsetzungsprodukt B) in die Vorlage A) eingetragen und die Reaktionstemperatur nach Maßgabe von Viskosität und Reaktionswärme auf 90 bis 100 °C gebracht.

### Umsetzungsorodukt B)

1 260,7 g Polytetrahydrofuranetherdiol (2 Mol) MG ca. 650, OHZ 178 mgKOH/g, (TERATHANE^{R} 650 der Firma DuPont)
90 g Butandiol-1.4 (1 Mol)
134 g Trimethylolpropan (1 Mol) und
170 g Trimethyladipinsäureanhydrid (1 Mol)
werden auf 90 °C erhitzt, es kommt zur Halbesterbildung, die durch eine Säurezahl von 34 mgKOH/g charakterisiert ist. Nach Abkühlung auf 50 °C werden 3 g Dibutylzinndilaurat eingetragen.
In das Prepolymer (hergestellt aus A) und B) werden bei ca. 0,2 Massengehalt NCO 400 g 10 %ige NaOH (40 g NaOH + 360 g H₂O) (1 Mol NaOH) eingetragen und bei 85 bis 90 °C homogenisiert. Durch Zugabe von 4 145,1 g H₂O erhält man umgehend eine feinteilige ca. 40 %ige, blaustichige Emulsion. Die Herstellungszeit beträgt ca. 6 Stunden.

### Viskosität der Dispersion: DIN-4-Becher (16 sec)

Stahlblech- und Foliendaten nach Härtung der Dispersion bei Zusatz von 2,0 Gewichtsprozent DAROCUR^{R} 1 173 mit 200 Watt/inch in 5 Sekunden:

| | |
|---|---|
| Pendelhärte nach König gemäß DIN 53 157 (sec) | 42 |
| Erichsentiefung gemäß DIN 53 156 (mm) | > 10,0 |
| Schichtdicke (µm) | 130 |
| Bruchspannung gemäß DIN 53 455 (N/mm²) | 32,5 ± 3,1 |
| Bruchdehnung (%) | 141 ± 14 |
| Lösemittelresistenz Reibtest mit 1 kg (rubs) | |

| Belastung/cm² | |
|---|---|
| Aceton | > 100 kein Angriff |
| Xylol | > 100 kein Angriff |

| Waschlaugentest: | Befund: |
|---|---|
| 80 °C heiße, 4 % NaOH | nach 6 x 30 Min. |
| 6 x 30 Min. Einwirkung | kein Angriff |

### Beispiel 5 (erfindungsgemäß)

- Basis:: Isophorondiisocyanat/Polyetherpolyole-Maleinsäureanhydrid

A) Ansatz wie im Beispiel 4 beschrieben bis zur Ausbildung eines Harzes von 24,9 bis 25,9 Massen-% NCO.
   Anschließend werden 1 585,6 g Umsetzungsprodukt B) in die Vorlage A) eingetragen und die Reaktionstemperatur nach Maßgabe von Viskosität und Reaktionswärme auf 90 bis 100 °C gebracht.

### Umsetzungsprodukt B

1 260,7 g Polytetrahydrofuranetherdiol (2 Mol) MG ca. 650, OHZ 178 mgKOH/g (TERATHANE^{R} 650 der Firma DuPont)
90 g Butandiol-1.4 (1 Mol)
134 g Trimethylolpropan (1 Mol)
98 g Maleinsäureanhydrid (1 Mol)
werden auf 90 °C erhitzt, es kommt zur Halbesterbildung, die durch eine Säurezahl von 35,5 mgKOH/g charakterisiert ist. Nach Abkühlung auf 50 °C werden 2,9 g Dibutylzinndilaurat eingetragen.

In das Prepolymer (hergestellt aus A) und B) werden bei ca. 0,2 Massengehalt NCO 400 g 10 %ige NaOH (40 g NaOH + 360 g H₂O) (1 Mol NaOH) eingetragen und homogenisiert. Durch Zugabe von 5 084 g H₂O erhält man umgehend eine feinteilige ca. 35 %ige, blaustichige Emulsion. Die Herstellungszeit beträgt ca. 6 Stunden.
Viskosität der Dispersion: DIN-4-Becher (25 sec).

Stahlblech- und Foliendaten nach Härtung der Dispersion bei Zusatz von 2,0 Gewichtsprozent DAROCUR^{R} 1 173 (bezogen auf Harz) mit 200 Watt/inch in Sekunden:

| | |
|---|---|
| Pendelhärte nach König gemäß DIN 53 157 | 80 |
| (sec) | |
| Erichsentiefung gemäß DIN 53 156 (mm) | > 10,0 |
| Schichtdicke (µm) | 101 |
| Bruchspannung gemäß DIN 53 455 (N/mm²) | 30,8 ± 2,9 |
| Bruchdehnung (%) | 70 ± 11 |
| Lösemittelresistenz Reibtest mit 1 kg (rubs) | |

| Belastung/cm² | |
|---|---|
| Aceton | > 100 kein Angriff |
| Xylol | > 100 kein Angriff |

| Waschlaugentest: | Befund: |
|---|---|
| 80 °C heiße, 4 % NaOH | nach 6 x 30 Min. |
| 6 x 30 Min. Einwirkung | kein Angriff |

### Beispiel 6 (erfindungsgemäß)

- Basis:: Isophorondiisocyanat/Polyetherpolyole-Bernsteinsäureanhydrid

A) Ansatz wie in Beispiel 4 beschrieben bis zur Ausbildung eines Harzes von 24,9 bis 25,9 Massen-% NCO. Anschließend werden 1 587,6 g Umsetzungsprodukt B) in die Vorlage A) eingetragen und die Reaktionstemperatur nach Maßgabe von Viskosität und Reaktionswärme auf 90 bis 100 °C gebracht.

### Umsetzungsprodukt B

1 260,7 g Polytetrahydrofuranetherdiol (2 Mol) MG ca. 650, OHZ 178 mgKOH/g (TERATHONE^{R} 650 der Firma DuPont
90 g Butandiol-1.4
134 g Trimethylolpropan
100 g Bernsteinsäureanhydrid
werden auf 90 °C erhitzt, es kommt zur Halbesterbildung, die durch eine Säurezahl von 35,4 mg KOH/g charakterisiert ist. Nach Abkühlung auf 50 °C werden 2,9 g Dibutylzinndilaurat eingetragen.

In das Prepolymer (hergestellt aus A) und B) werden bei ca. 0,2 Massengehalt NCO 400 g 10 %ige NaOH (40 g + 360 g H₂O) (1 Mol NaOH) eingetragen und homogenisiert. Durch Zugabe von 4 854 g H₂O erhält man umgehend eine feinteilige ca. 36 %ige blaustichige Emulsion. Die Herstellungszeit beträgt ca. 6 Stunden.

### Viskosität der Dispersion: DIN-4-Becher (26 sec.).

Stahlblech- und Foliendaten nach Härtung der Dispersion bei Zusatz von 2,0 Gewichtsprozent DAROCUR^{R} 1 173 (bezogen auf Harz) mit 200 Watt/inch in Sekunden:

| | |
|---|---|
| Pendelhärte nach König gemäß DIN 53 157 (sec) | 65 |
| Erichsentiefung gemäß DIN 53 156 (mm) | > 10,0 |
| Schichtdicke (µm) | 99 |
| Bruchspannung gemäß DIN 53 455 (N/mm²) | 31,0 ± 3,7 |
| Bruchdehnung (%) | 119 ± 16 |
| Lösemittelresistenz Reibtest mit 1 kg | |

| Belastung/cm² | |
|---|---|
| Aceton | > 100 kein Angriff |
| Xylol | > 100 kein Angriff |

| Waschlaugentest: | Befund: |
|---|---|
| 80 °C heiße, 4 % NaOH | nach 6 x 30 Min. |
| 6 x 30 Min. Einwirkung | kein Angriff |

## Patentansprüche

1. Verfahren zur Herstellung wäßriger, strahlenhärtbarer Urethanacrylatdispersionen,
dadurch gekennzeichnet,
daß Isophorondiisocyanat zunächst mit Hydroxyacrylaten bei 25 bis 50 °C im NCO/OH-Äquivalentverhältnis von 3 : 1 bis 5 : 1 unter Bildung von NCO-haltigen Urethanacrylaten umgesetzt, anschließend mit COOH-haltigen Esterpolyolen aus Polyolen und Dicarbonsäureanhydriden in Abwesenheit von Lösemitteln bei 50 bis 100 °C unter Bildung von COOH-haltigen Urethanacrylaten mit einem COOH-Gehalt von 1 - 2 Massen-%, bezogen auf den Feststoff, und mit einem NCO-Gehalt von ≦ 0,2 Massen-% weiter umgesetzt und danach bei 90 bis 95 °C mit wäßrigen Basen und Wasser emulgiert werden.

2. Verfahren nach Anspruch 1,
dadurch gekennzeichnet,
daß COOH-haltige Esterpolyole aus Polyolen und Trimethyladipinsäureanhydrid, Maleinsäureanhydrid oder Bernsteinsäureanhydrid eingesetzt werden.

3. Verfahren nach Anspruch 1,
dadurch gekennzeichnet,
daß der COOH-Gehalt der Prepolymeren vorzugsweise 1,2 bis 1,8 Massen-%, bezogen auf Feststoff, beträgt.

4. Verfahren nach Anspruch 1,
dadurch gekennzeichnet,
daß als Hydroxyacrylat Hydroxyethylacrylat eingesetzt wird.

5. Verfahren nach Anspruch 1,
dadurch gekennzeichnet,
daß als Basen zur Neutralisation und Emulgierung NaOH, KOH, NH₄OH, LiOH und/oder tert.Amine verwendet werden.

## Claims

1. Process for the manufacture of aqueous, radiation-hardenable urethane acrylate dispersions,
characterized in that,
isophorone diisocyanate is initially reacted with hydrorylacrylates at 25 to 50°C with the ratio of the NCO/OH equivalents from 3:1 to 5:1, to form urethane acrylates containing NCO, which are further reacted, at 50 to 100°C in the absence of solvents, with ester polyols containing COOH, formed from polyols and dicarboxylic acid anhydrides, to produce urethane acrylates containing COOH, with a COOH content of 1 to 2% by mass, with respect to the solid, and with an NCO content of ≦0.2% by mass, which are then emulsified at 90 to 95°C with aqueous bases and water.

2. Process according to claim 1,
characterized in that,
ester polyols containing COOH, formed from
polyols containing COOH, formed from polyols and trimethyl adipic acid anhydride, maleic acid anhydride or succinic acid anhydride, are used.

3. Process according to claim 1,
characterized in that,
the COOH content of the prepolymers is preferably 1.2 to 1.8% by mass with respect to the solid.

4. Process according to claim 1,
characterized in that,
hydroryethyl acrylate is used as the hydroxyacrylate.

5. Process according to claim 1,
characterized in that,
NaOH,KOH,NH₄OH,LiOH and/or tertiary amines are used as bases for the neutralization and emulsification.

## Revendications

1. Procédé d'obtention de dispersions aqueuses acrylate/uréthane, durcissables par irradiation, caractérisé en ce que le diisocyanate d'isophorone est mis à réagir en premier lieu avec des hydroxyacrylates à 25 à 50 °C, dans un rapport en équivalents NCO/OH de 3 : 1 à 5 : 1, avec formation d'acrylate/uréthane renfermant NCO, ensuite on fait réagir à nouveau avec des esters de polyols renfermant COOH, à base de polyols et d'anhydrides d'acides dicarboxyliques, en l'absence de solvant à 50 à 100 °C, avec formation d'uréthane acrylate renfermant COOH ayant une teneur en COOH de 1 à 2 % massique, rapporté au solide et ayant une teneur en NCO de ≦ 0,2 % en masse et ensuite sont émulsionnés à 90 à 95°C avec des bases aqueuses et de l'eau.

2. Procédé selon la revendication 1, caractérisé en ce que des esters de polyols renfermant COOH, à base de polyols et d'anhydride d'acide triméthyladipique, de l'anhydride maléique ou de l'anhydride succinique sont mis en jeu.

3. Procédé selon la revendication 1, caractérisé en ce que la teneur en COOH des prépolymères s'élève de préférence de 1,2 à 1,8 % massique, rappor-té au solide.

4. Procédé selon la revendication 1, caractérisé en ce que l'on met en jeu comme hydroxyacrylate, un hydroxyéthylacrylate.

5. Procédé selon la revendication 1, caractérisé en ce que l'on utilise comme bases en vue de la neutralisation et de l'émulsification, NaOH, KOH, NH₄OH, LiOH et/ou des amines tertiaires.
